# EUROPÄISCHE PATENTSCHRIFT

(11) **EP 1 927 913 B1**
(45) Veröffentlichungstag und Bekanntmachung des Hinweises auf die Patenterteilung: **30.11.2011**
(21) Anmeldenummer: 07020746.9
(22) Anmeldetag: 24.10.2007
(51) Int. Cl.: G05B 19/418

(54) **Echtzeit-Prozesshistorien-Server**
Real-time process history server
Serveur d'historique de processus en temps réel

(30) Priorität: 13.11.2006 DE 102006053698; 21.12.2006 DE 102006061962
(43) Veröffentlichungstag der Anmeldung: 04.06.2008
(73) Patentinhaber: ABB Technology AG, 8050 Zürich (CH)
(72) Erfinder: Hanking, Heino, 32429 Minden (DE)
(74) Vertreter: Miller, Toivo

(56) Entgegenhaltungen:
- WO-A-2004/031875
- DE-A1- 10 243 065
- DE-A1-102004 030 781
- US-B1- 6 694 371

## Beschreibung

Die Erfindung bezieht sich auf einen Echtzeit-Prozesshistorien-Server. Ein solcher Server ist geeignet für den Einsatz als sogenannter Historienserver in einem System zum Bedienen und Beobachten eines technischen Prozesses bzw. einer technischen Anlage. Historienserver dienen dabei als Echtzeitdatenbasis für Operator-Trendanzeigen. Der Echtzeit-Prozesshistorien-Server ist gleichzeitig auch zur Bereitstellung und Verwaltung von Prozessinformationsdaten für die Betriebsleitebene geeignet. Systeme zur Bereitstellung und Verwaltung von Prozessinformationsdaten werden auch als Anlagen- oder Prozessinformationsmanagement-Systeme, oder kurz als PIMS bezeichnet, und sind üblicherweise in einer Ebene oberhalb von Prozessleitsystemen eingesetzt. Sie bilden die Datenbasis für weiterführende Reports und Detailanalysen die typischerweise im Büro-Umfeld eines Betriebes durchgeführt werden.

Mit der seit Jahren zu beobachtenden Zunahme an Prozessinformationsdaten, die mittels Anlagen- oder Prozessinformationsmanagement-Systemen zu erfassen, zu verarbeiten, zu speichern und auf Anfragen von Clients oder aus dem Operator-Bereich mittels Servern zur Verfügung zu stellen sind, steigen auch die Anforderungen an Datenbanken oder Historienspeicher solcher Systeme.

In dem Bemühen, solchen zunehmenden Anforderungen an Anlagen- oder Prozessinformationsmanagement-Systeme besser entsprechen zu können, sind bereits unterschiedliche Systemstrukturen vorgeschlagen worden. So ist zum Beispiel in DE 102 43 065 B4 ein System zum Bedienen und Beobachten eines Produktionsprozesses beschrieben, das eine integrierte Historien-Funktionalität aufweist, wobei neben Mitteln zur Bereitstellung und Verarbeitung von Prozessinformationsdaten eine Historien-Datenbank vorhanden ist. Das dort beschriebene System ist so ausgebildet, dass die Eigenschaften von Bedien- und Beobachtungssystemen sowie von Historien-Systemen kombiniert sind, wobei die erforderlichen Prozessinformationsdaten nur einmal erfasst werden.
In der WO 2004/031875 A1 ist ein Prozessleitsystem (Advanced Process Control, APC) zur Beobachtung und Steuerung eines Halbleiterherstellungsprozesses beschrieben, welches einen APC-Server zur Bereitstellung prozessbezogener Anwendungen enthält. Der APC-Server ist über einen Interface-Server mit diversen Feldgeräten verbunden. Der Interface-Server kann eine Echtzeitdatenbank enthalten, die als Datendrehscheibe (hub) fungiert.

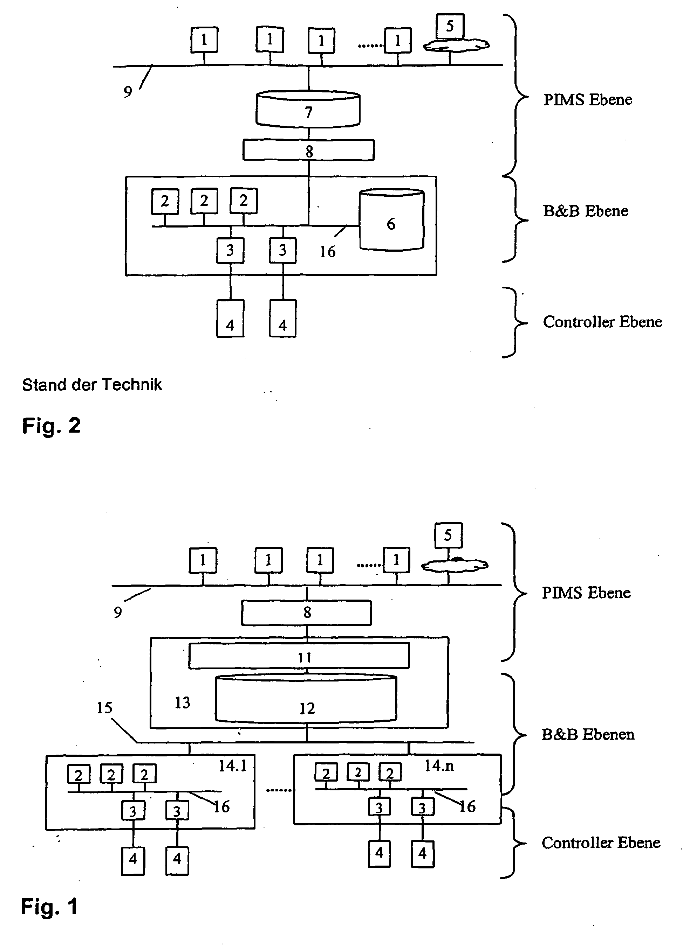

Bekannte Anlagen- oder Prozessinformationsmanagement-Systeme (PIMS) lassen sich grundsätzlich in zwei Gruppen einordnen, wie nachstehend anhand einer in Fig. 1 dargestellten Anlagenstruktur erläutert ist.

In Fig. 1 sind drei Strukturebenen dargestellt, nämlich eine Controller-Ebene, eine Beobachtungs- und Bedien (B&B)-Ebene und eine PIMS-Ebene. In der Beobachtungs- und Bedien-Ebene sind Operator-Arbeitsplätze 2, eine Echtzeithistoriendatenbank 6 und Connectivity-Server 3 über ein Netzwerk miteinander verbunden, wobei an die Connectivity-Server 3 Controller-Schränke 4 der Controller-Ebene angeschlossen sind. Die B&B-Ebene ist über eine Firewall 8 mit einem PIMS-Server 7 verbunden. In der PIMS-Ebene sind Office-PCs als Clients 1 über eine erste Datenübertragungseinrichtung 9 mit dem PIMS-Server 7 verbunden. Weiterhin haben auch Internet-Nutzer 5 über die erste Datenübertragungseinrichtung 9 Zugriff auf den PIMS-Server 7. Ob sowohl PIMS-Server 7 als auch eine Historiendatenbank 6 vorhanden sind, bzw. in welcher Ausgestaltung, hängt vom jeweiligen Lösungskonzept ab. Die Ebenen B&B und Controller bilden zusammen ein sogenanntes Distributed Control System (DCS).

Zu einer ersten bekannten Gruppe gehören Systeme, bei denen in sogenannten Prozessinformationsmanagement-Lösungen flexibel nutzbare Prozessinformationsmanagement(PIMS)-Server (7, Fig. 2) das Datenrückgrat für die vom DCS entkoppelte Bürowelt (Information Backbone) bilden. Diese PIMS Systeme sind also vom DCS unabhängig, und Prozessinformationsdaten werden aus dem DCS typisch als verdichtete Daten und mit relativ geringer Geschwindigkeit übertragen.

Vorteilhafte Eigenschaften solcher Systeme mit PIMS-Server sind, dass sie aus Sicht der PIMS Ebene flexibel umkonfigurierbar sind, z.B. bezüglich Anlegen, Löschen, und Manipulieren von Messpunkthistorien, dass historische Daten über viele Jahre, typisch 5 bis 10 Jahre speicherbar sind, dass das Überschreiben/Verändern von historischen Werten möglich ist, dass eine große Anzahl von Standard-APIs (Standardprogrammierschnittstellen), wie ADO, OLE-DB und beliebige Web-Interfaces für eine einfache Datenanbindung an die Office-Welt verfügbar sind.

Nachteilige Eigenschaften der Systeme mit extra PIMS-Server sind, dass aufgrund der großen Datenmenge und dem Einsatz von Standard-Datenbanken die Langzeitspeicherung meist nur als verdichtete Min-, Max-, oder AVG-Daten (sog. Aggregat-Werte) möglich ist, Überschreiben nur im vorkonfigurierten Zeitraster des jeweiligen Messpunktes möglich ist, das System zur Speicherung von Rohdaten nicht geeignet ist, keinen Echtzeitanforderungen entsprochen werden kann, insbesondere wegen unter Umständen langen, bzw. nicht deterministischen Response-Zeiten beim Schreiben, Lesen oder bei der Konfiguration, und dass schließlich Laborwerteingabe nur mit einer extra Tabellenstruktur möglich ist, sowie dadurch bedingt keine echte Gleichbehandlung als Rohwert oder als verdichteter Aggregat-Wert möglich ist.

Zur zweiten bekannten Gruppe gehören Systeme, bei denen jeweils im DCS eine proprietäre Datenbank (6 in Fig. 2) integriert ist, die zwar den Echtzeitanforderungen des DCS gerecht wird, aber nicht so flexibel nutzbar ist wie der PIMS-Server der ersten Gruppe. Im DCS-Bereich war die Flexibilität bezüglich einer Online-Umkonfiguration sowie anderer Datenbank-Operationen, wie z. B. Teilbereiche löschen oder Überschreiben im beliebigen Zeitraster, bisher allerdings auch kaum nötig, da die zugehörige Anlage typisch nur einmal insgesamt geplant konfiguriert und gestartet wurde. Außerdem war eine Flexibilität auch schwierig zu implementieren, da proprietäre Datenbanken vorrangig darauf ausgelegt waren, möglichst schnell viele Daten zu sammeln, zu speichern und möglichst performant, also große Datenmengen mit hoher Geschwindigkeit, typischerweise in Form von Grafik-Trends dem Anlagenoperator darzustellen.

Vorteilhafte Eigenschaften solcher Systeme mit DCS-proprietärer Datenbank sind, dass sie hochperformant sind, und Echtzeitverhalten beim Speichern und Lesen haben.

Nachteilige Eigenschaften der Systeme mit DCS-proprietärer Datenbank sind, dass sie nicht flexibel, oder nur in Grenzen, online umkonfigurierbar sind, ein für PIMS-Anforderungen zu kurzer Zeitraum gegeben ist, sie keinen, oder nur sehr eingeschränkten Datenexport in die Office-Welt ermöglichen, ein nur rudimentäres Spezial-API für DCS-Clients, Trenddarstellung und Grafikbild möglich ist, ein Überschreiben der Historie nur sehr eingeschränkt möglich ist, und Laborwerteingabe meist gar nicht möglich ist.

Mit Standardmitteln, wie SQL-Server plus einem speziell optimierten Datenmodell und zusätzlichem Programmieraufwand ließen sich zwar die Lösungen der beiden genannten System-Gruppen so kombinieren, dass Vorteile beider Varianten nutzbar sind, wobei die Nachteile bezüglich Echtzeit- und Performanceeigenschaften aber ebenfalls kombiniert wären.

Davon ausgehend liegt der Erfindung die Aufgabe zugrunde, einen Echtzeit-Prozesshistorien-Server anzugeben, der eine Kombination der für die beiden System-Gruppen genannten vorteilhaften Eigenschaften aufweist, und bei der die negativen Eigenschaften der beiden System-Gruppen aber vermieden sind.

Diese Aufgabe wird durch einen Echtzeit-Prozesshistorien-Server mit den im Anspruch 1 angegebenen Merkmalen gelöst. Vorteilhafte Ausgestaltungen sind in weiteren Ansprüchen und in der Beschreibung angegeben.

Mit der Erfindung wird also ein Echtzeit-Prozesshistorien-Server für den Einsatz in einem Prozessinformationsmanagement-System (PIMS) und vorzugsweise mehreren, auch unterschiedlichen und verteilten Prozessleitsystemen (Distributed Control Systems DCS) vorgeschlagen, wobei der Echtzeit-Prozesshistorien-Server eine Kombination eines in Richtung der Office-Welt vorgeschalteten Report-Servers und eines echtzeitfähigen DCS-Historienservers aufweist. Der Echtzeit-Prozesshistorien-Server ist dafür eingerichtet, mittels des Report-Servers sowohl Office-Clients als auch gleichzeitig Operator-Arbeitsplätzen der DCS-Systeme unter Echtzeitbedingungen Zugriff auf den DCS-Server und darin gespeicherte Prozesshistoriendaten zu ermöglichen Wegen seiner Eigenschaft als Historienserver unter Echtzeitbedingungen und zusätzlicher, weiter unten erläuterter Eigenschaften, geht der erfindungsgemäße Echtzeit-Prozesshistorien-Server als ein Multi-DCS Information Backbone weit über die Eigenschaften einer bekannten Prozessinformationsmanagement-Datenbank hinaus.

Die weitere Beschreibung der Erfindung und deren Vorteile sowie deren Ausgestaltungen erfolgt nachstehend anhand eines in Zeichnungsfiguren dargestellten Ausführungsbeispiels. In den einzelnen Zeichnungsfiguren 1 und 2 übereinstimmende Komponenten sind mit denselben Bezugszeichen versehen und bedürfen keiner erneuten Erläuterung.

### Es zeigt:

- Fig. 1: eine Anlagenstruktur mit dem erfindungsgemäßen Echtzeit-Prozesshistorien-Server, und
- Fig. 2: eine Anlagenstruktur zur Erläuterung von Lösungen nach dem Stand der Technik.

In Fig. 1 ist eine beispielhafte Anwendung des erfindungsgemäßen Echtzeit-Prozesshistorien-Servers 13 dargestellt. Aus der Darstellung ist ersichtlich, dass der Echtzeit-Prozesshistorien-Server 13 quasi in der Mitte zwischen einer typischen PIMS-Ebene und einer Bedien- und Beobachtungs-Ebene eingesetzt werden kann. Er kann einfach und flexibel von den Einrichtungen 1, 2 und 5 der beiden Ebenen genutzt werden. Mehrere DCS-Systeme 14.1 bis 14.n, die alle keine Historiendatenbank enthalten, sind über eine zweite Datenübertragungseinrichtung 15 mit dem Echtzeit-Prozesshistorien-Server 13 verbunden. Alle erwähnten Datenübertragungssysteme 9, 15 und 16 können beispielsweise Bussysteme oder redundante Standardnetzwerke sein. Durch die DCS-Systeme 14.1 bis 14.n aus einer technischen Anlage, bzw. einem Prozess erfasste, oder an den Operator-Arbeitsplätzen 2 eingegebene Prozessinformationen werden über die zweite Datenübertragungseinrichtung 15 dem Echtzeit-Prozesshistorien-Server 13 zugeführt und dort in einem kombinierten PIMS/DCS-Server 12 gespeichert.

Report-Anfragen von Clients 1, 5 der PIMS-Ebene und aus den Operator-Arbeitsplätzen 2 der Beobachtungs- und Bedien(B&B)-Ebene erfordern typisch erhebliche Ressourcen, wie CPU, Speicher und Festplatte. Zur Vermeidung einer Performance-Beeinträchtigung des PIMS/DCS-Servers 12 ist im Echtzeit-Prozesshistorien-Server 13 zur Behandlung von Report-Anfragen ein Report-Server 11 angeordnet. Report-Anfragen werden vom Report-Server 11 zwar immer angenommen und in eine Report-Warteschlange eingereiht, aber erst nacheinander abgearbeitet. Die Warteschlange ist von Anwendern einsehbar. Der Report-Server 11 verhält sich also bezüglich dieser transparenten Serialisierung ähnlich wie ein Drucker bei mehreren Druckaufträgen.

Mittels einiger spezieller Techniken ist erreicht, dass die Speicherung von Prozessdaten in einem Standard-Filesystem möglich ist. Dazu werden Signale wie einzelne Teildatenbanken behandelt. Pro Signal-Teildatenbank wird ein eigener Ordner im Filesystem genutzt. Dadurch sind die Teildatenbanken über eine beliebige Anzahl von Speicherplatten verteilbar. So lässt sich eine hohe Performance erreichen, und es lassen sich Redundanz-Aspekte berücksichtigen.

In einem RAM des PIMS/DCS-Servers 12 ist für jedes Signal ein Kurzzeit-Schreib/Lesecache eingerichtet, der bereits für eine interne SQL Engine zugänglich ist, wodurch die gespeicherten Werte für Clientanfragen verzögerungsfrei verfügbar sind.

Für eine "festplattenfreundliche" Entleerung der Kurzzeitcaches ist ein sogenannter Flush-Prozess eingeführt. Der Flush-Prozess steuert außerdem individuell dynamisch die jeweilige Cache-Größe. Die Cache-Größe richtet sich nach der Signalgeschwindigkeit, wobei schnelle Signale, die viele Werte pro Zeiteinheit haben, größere Kurzzeitcaches zugeteilt bekommen, und langsame Signale nach und nach ihren Cache-Speicher an schnelle Signale abgeben. Der Flush-Prozess arbeitet Zeit-und Füllgrad-gesteuert so, dass möglichst wenig Festplattenzugriffe notwendig sind, bzw. Zugriffe möglichst gleichmäßig verteilt erfolgen. Durch diese Maßnahmen wird erreicht, dass auch bei Verwendung eines Standard-Filesystems wie NTFS eine hohe Leistung beim Lesen und Schreiben erreicht wird.

Als Redundanzmaßnahme erfolgt eine Spiegelung der Daten immer sofort über eine besondere, redundante Netzwerkleitung zwischen Serverknoten, also sogenanntes Hot-Mirroring aller Schreibkommandos. Damit wird als Nebeneffekt ein Load-Balancing zwischen den Serverknoten erreicht, da beide Knoten aktiv für ClientAnfragen zur Verfügung stehen.

Aufgrund der dargelegten Struktur und der eingesetzten Methoden im erfindungsgemäßen Echtzeit-Prozesshistorien-Server wird eine Reihe von vorteilhaften Eigenschaften erreicht:

Der Echtzeit-Prozesshistorien-Server ist gleichzeitig einsetzbar als Prozessinformationsmanagement-System PIMS und als DCS-Historiendatenbank für mehrere verschiedene DCS-Systeme. Der eingesetzte Report-Server entkoppelt Ressourcen-zehrende Report-Anfragen und bewirkt ein Echtzeitverhalten für wichtige DCS-Funktionen. Ohne das Echtzeitverhalten zu gefährden, ist der Prozesshistorien-Server flexibel umkonfigurierbar bezüglich Anlegen, Löschen oder Manipulieren von Messpunkthistorien.

Bei gleichbleibender Performance sind historische Daten über viele Jahre (heute typisch 5 bis 20 Jahre) im Rohformat verfügbar. Aggregat-Werte sind daher auf Abruf mit beliebigem Intervall-Parameter verfügbar. Das ist beispielsweise bei den eingangs erwähnten reinen Prozessinformationsmanagement-Lösungen nicht der Fall, weil dort verdichtete Werte (z. B. 15-min-MIN,MAX,AVG) abgelegt werden, wo später dann nicht mehr die original Rohwerte zu Verfügung stehen. Weiterhin können daraus später nur eingeschränkt weitere Aggregate (basierend auf Vielfache, z. B. 30-min-Werte) errechnet werden.

Zu den vorteilhaften Eigenschaften zählt auch eine einfache Datenanbindung an die Office-Welt (z. B. Excel-Addlns) der PIMS-Ebene. Der Prozesshistorien-Server ist wesentlich leistungsfähiger als eine Standard-Prozesshistorien-Datenbank Echtzeitverhalten ist beim Lesen und beim Schreiben gegeben, deterministisch, ohne Blockade durch verdeckte Datenbank-interne Umorganisation. Überschreiben von Historiendaten ist in beliebig änderbarer zeitlicher Auflösung möglich. Laborwerteingabe ist nach gleichem Konzept möglich. Prognosewertereihen sind beliebig speicher- und überschreibbar.

Labormessreihen, Prognoseverläufe, Rohdaten und errechnete Daten folgen alle einem einheitlichen internen Datenmodell, was sich in einem einfachen API (Application Program Interface) widerspiegelt und die Entwicklung und Integration von Client-Anwendungen wesentlich vereinfacht. Die Speicherung der Daten kann über viele Datenspeicher verteilt erfolgen. Dies bewirkt eine Ressourcenteilung und damit eine hohe Gesamt-Performance. Außerdem ergeben sich dadurch zusätzliche Teil-Redundanzaspekte und die Möglichkeit einer einfachen Integration in kundeneigenen hochverfügbaren Data-Centers.

Als besonders vorteilhaft erweist es sich, wenn zusammen mit jedem eigentlichen Messwert eines Signals auch ein Zeitstempel mit in einer Datenbank des PIMS/DCS-Servers 12 abgespeichert wird, der den genauen Zeitpunk der Messung des betreffenden Messwertes beschreibt. Auf diese Weise ist eine spätere Analyse der abgespeicherten Daten vereinfacht.

Als weiterhin vorteilhaft erweist es sich, wenn die Abspeicherung eines Signals nicht zwangsläufig in äquidistanten Zeitschritten erfolgt, sondern in Abhängigkeit der Dynamik des betreffenden Signals. So werden Signale in Zeitabschnitten mit einer geringen Dynamik, beispielsweise der gemessene nahezu konstante Energieverbrauch in einer Fabrik während eines störungsfreien Produktionsbetriebs, in großen Zeitabständen abgespeichert, unter Umständen lediglich im Stundenbereich.

Auf der anderen Seite werden Signale mit einer hohen Dynamik, beispielsweise der gemessene Verlauf des Momentanwertes der Spannung einer Energieversorgung bei Eintritt eines Kurzschlusses, in einem sehr geringen Zeitintervall abgespeichert, beispielsweise mit bis zu 10000 Messwerten je Sekunde, wobei in diesem Beispiel eher 1000 Messwerte je Sekunde üblich sind.

Als geeignetes Kriterium zur Abspeicherung eines neuen Messwertes eines Signals in einer Datenbank des PIMS/DCS-Servers 12 ist in vorteilhafter Weise ein Überbeziehungsweise Unterschreiten eines Differenzwertes aus aktuellem Messwert des betreffenden Signals und zuvor abgespeicherten Messwert verwendbar.

Auf diese Weise wird der benötigte Speicherplatz in der Datenbank des PIMS/DCS-Servers 12 nämlich ohne Informationsverlust erheblich reduziert und der Speicherverbrauch in der Datenbank ist proportional zur Informationsdichte des abzuspeichernden Signals.

Zusammenfassend ist festzustellen, dass der erfindungsgemäße Echtzeit-Prozesshistorien-Server mittels seines Report-Servers so konstruiert ist, dass gleichzeitig die Anforderungen der Prozessinformationsmanagement-Ebene und der Prozessleitebene erfüllt sind. Bekannte Anordnungen können aus nachstehenden Gründen nicht diesen Anforderungen genügen. Anforderungen im Prozessleitsystem (DCS) setzen Echtzeitfähigkeit voraus: ein DCS Historien-Server muss also in der Lage sein innerhalb einer fest definierten Zeit a) die Daten vom DCS anzunehmen und verfügbar für Anfragen haben (z.B. spätestens nach 1 sec) und b) bei Historien-Anfragen vom Leitstand (z. B. zur Trendanzeige in der Leitstandswarte) diese Daten innerhalb einer ebenfalls fest definierten Zeit liefern (z.B. spätestens nach 5 sec). Das ist ganz im Gegenteil zum PIMS-System: Im Prozessinformationsmanagementsystem kommt es nicht auf die Echtzeitanforderung an. Hier ist vielmehr wichtig, dass z.B. Office Clients flexibel eigene Report- und Analyse-Anfragen (z. B. per Excel) erstellen können. Nimmt man an, dass Daten mehrerer Jahre analysiert/reportet werden sollen, so kann eine Anfrage 10 Sekunden oder auch 10 Minuten dauern. Das Problem ist dabei, dass in einem herkömmlichen "Ein-Server6&-System diese lang dauernde Arifrage während dieser Zeit die Echtzeitanfragen aus dem Prozessleitsystem stark verlangsamen würde. Die Echtzeitfähigkeit im DCS Bereich könnte also nicht mehr garantiert werden. Bei der erfindungsgemäßen Lösung ist der vorgeschaltete Report-Server mit seiner Warteschlange das wichtige Element, das die Entkopplung bewirkt und damit weiterhin die Echtzeitfähigkeit in Richtung DCS garantiert. Nicht in Richtung PIMS. Ein zusätzlicher Effekt dieser Anordnung ist, dass auch ein Operator-Client in der DCS-Ebene in der Lage ist, die Vorteile des Report-Servers zusätzlich zu nutzen. Er kann nämlich auch die (meist im Office-Bereich) vorkonfigurierten Reports in der DCS-Ebene abfragen, ohne dabei die Echtzeit-relevanten Teile zu stören.

## Patentansprüche

1. Echtzeit-Prozesshistorien-Server (13) für den Einsatz in mindestens einem verteilten Prozessleitsystem (14.1) zum Bedienen und Beobachten eines technischen Prozesses oder einer technischen Anlage, wobei der Echtzeit-Prozesshistorien-Server (13) einen echtzeitfähigen DCS-Historienserver (12) enthält zur Speicherung von aus der technischen Anlage oder dem technischen Prozess erfassten oder an Operator-Arbeitsplätzen (2) des Prozessleitsystems (14.1) eingegebenen Prozessinformationen, **dadurch gekennzeichnet, dass** der Echtzeit-Prozesshistorien-Server (13) darüber hinaus einen Report-Server (11) aufweist, der dafür eingerichtet ist, Report-Anfragen von sowohl Clients (1, 5) eines Prozessinformationsmanagement-Systems als auch von den Operator-Arbeitsplätzen (2) des Prozessleitsystems (14.1) anzunehmen, in eine Warteschlange aufzunehmen und nacheinander abzuarbeiten.

2. Echtzeit-Prozesshistorien-Server (13) nach Anspruch 1, **dadurch gekennzeichnet, dass** die Clients (1, 5) Büro-PCs (1) des PIMS-Bereichs und/oder Internet-Nutzer (5) sind.

3. Echtzeit-Prozesshistorien-Server (13) nach Anspruch 1 oder 2, **dadurch gekennzeichnet, dass** die Clients (1, 5) über eine erste Datenübertragungseinrichtung (9) und eine Firewall (8) mit dem Echtzeit-Prozesshistorien-Server (13) verbunden sind.

4. Echtzeit-Prozesshistorien-Server (13) nach einem der vorstehenden Ansprüche, **dadurch gekennzeichnet, dass** das Prozessleitsystem (14.1) über eine zweite Datenübertragungseinrichtung (15) mit dem Echtzeit-Prozesshistorien-Server (13) verbunden ist.

5. Echtzeit-Prozesshistorien-Server (13) nach einem der vorstehenden Ansprüche, **dadurch gekennzeichnet, dass** der DCS-Historienserver (12) dafür eingerichtet ist, Signale als Teildatenbank zu behandeln, und in seinem Filesystem pro Signal-Teildatenbank einen eigenen Ordner zu nutzen.

6. Echtzeit-Prozesshistorien-Server (13) nach Anspruch 5, **dadurch gekennzeichnet, dass** der DCS-Historienserver (12) ein RAM enthält, in dem Kurzzeit-Schreib/Lesecaches für jedes Signal eingerichtet sind, deren Größe dynamisch änderbar ist.

7. Echtzeit-Prozesshistorien-Server (13) nach Anspruch 6, **dadurch gekennzeichnet, dass** auf einen im DCS-Historienserver (12) eingerichteten Cache eine ebenfalls eingerichtete SQL-Engine Zugriff hat.

8. Echtzeit-Prozesshistorien-Server (13) nach einem der Ansprüche 6 oder 7, **dadurch gekennzeichnet, dass** der DCS-Historienserver (12) dafür eingerichtet ist, mittels eines Flush-Prozesses eine Entleerung der Kurzzeit-Caches zu steuern, sowie die dynamische Anpassung der Größe der Kurzzeit-Schreib/Lesecaches abhängig von der jeweiligen Signalgeschwindigkeit zu steuern.

9. Echtzeit-Prozesshistorien-Server (13) nach einem der vorstehenden Ansprüche, **dadurch gekennzeichnet, dass** der DCS-Historienserver (12) dafür eingerichtet ist, zu jedem abgespeicherten Messwert eines Signals einen Zeitstempel mit in einer Datenbank des DCS-Historienservers (12) abzuspeichern.

10. Echtzeit-Prozesshistorien-Server (13) nach einem der vorstehenden Ansprüche, **dadurch gekennzeichnet, dass** der DCS-Historienserver (12) dafür eingerichtet ist, ein Signal in Abhängigkeit der Dynamik des Signals abzuspeichern.

11. Echtzeit-Prozesshistorien-Server (13) nach Anspruch 10, **dadurch gekennzeichnet, dass** als Kriterium für die Abspeicherung eines neuen Messwertes eines Signals ein Über- beziehungsweise Unterschreiten eines Differenzwertes aus aktuellem Messwert des betreffenden Signals und zuvor abgespeichertem Messwert verwendet ist.

## Claims

1. A real-time process history server (13) for use in at least one distributed process control system (14.1) for operating and observing a technical process or a technical installation, the real-time process history server (13) containing a DCS history server (12) with real-time capability for the storage of process information captured from the technical installation or the technical process or introduced in operator workstations (2) of the process control system (14.1), **characterised in that** the real-time process history server (13) also has a report server (11), which is enabled for allowing report queries both from clients (1, 5) of a process information management system and from the operator workstations (2) of the process control system (14.1), displaying them in a waiting queue and processing them one after the other.

2. The real-time process history server (13) according to claim 1, **characterised in that** the clients (1, 5) are PIMS-environment office PCs (1) and/or Internet users (5).

3. The real-time process history server (13) according to claim 1 or 2, **characterised in that** the clients (1, 5) are connected through a first data transmission device (9) and a firewall (8) with the real-time process history server (13).

4. The real-time process history server (13) according to any one of the preceding claims, **characterised in that** the process control system (14.1) is connected through a second data transmitting device (15) with the real-time process history server (13).

5. The real-time process history server (13) according to any one of the preceding claims, **characterised in that** the DCS history server (12) is enabled for handling signals as a subdatabase and for using a respective folder for each signal subdatabase in its file system.

6. The real-time process history server (13) according to claim 5, **characterised in that** the DCS history server (12) contains a RAM, in which short-term read/write caches for each signal are enabled, the size of which can be dynamically modified.

7. The real-time process history server (13) according to claim 6, **characterised in that** an also enabled SQL motor has access to a cache enabled in the DCS history server (12).

8. The real-time process history server (13) according to any one of claims 6 or 7, **characterised in that** the DCS history server (12) is enabled for controlling an emptying of the short-term cashes by means of a flush process, and for controlling the dynamic adaptation of the size of the short-term read/write caches depending on the respective signal speed.

9. The real-time process history server (13) according to any one of the preceding claims, **characterised in that** the DCS history server (12) is enabled for jointly storing a timestamp for each stored measurement signal value in a data base of the DCS history server (12).

10. The real-time process history server (13) according to any one of the preceding claims, **characterised in that** the DCS history server (12) is enabled for storing a signal depending on the signal dynamics.

11. The real-time process history server (13) according to claim 10, **characterised in that** a difference value of the current measurement value of the signal in question and the measurement value previously stored being exceeded or not is used as criteria for the storage of a new signal measurement value.

## Revendications

1. Serveur (13) d'historique de traitement en temps réel pour son utilisation dans au moins un système (14.1) de contrôle de traitement distribué pour gérer et observer un traitement technique ou une installation technique, le serveur (13) d'historique de traitement en temps réel contenant un serveur (12) d'historique DCS avec capacité de temps réel pour le stockage d'informations de traitement saisies à partir de l'installation technique ou le traitement technique ou introduites dans des postes (2) de travail d'opérateurs du système (14.1) de contrôle de traitement, **caractérisé en ce que** le serveur (13) d'historique de traitement en temps réel présente, en outre, un serveur (11) de rapports, qui est habilité pour admettre des consultations de rapports aussi bien de clients (1, 5) d'un système de gestion d'information de traitement que des postes (2) de travail d'opérateurs du système (14.1) de contrôle de traitement, en les disposant dans une queue d'attente et les traiter l'une après l'autre.

2. Serveur (13) d'historique de traitement en temps réel selon la revendication 1, **caractérisé en ce que** les clients (1, 5) sont PC (1) de bureau d'environnement PIMS et/ou utilisateurs (5) d'Internet.

3. Serveur (13) d'historique de traitement en temps réel selon la revendication 1 ou 2, **caractérisé en ce que** les clients (1, 5) sont connectés, à travers un premier dispositif (9) de transmission de données et un coupe-feu (8), avec le serveur (13) d'historique de traitement en temps réel.

4. Serveur (13) d'historique de traitement en temps réel selon l'une des revendications précédentes, **caractérisé en ce que** le système (14.1) de contrôle de traitement est connecté, à travers un deuxième dispositif (15) de transmission de données, avec le serveur (13) d'historique de traitement en temps réel.

5. Serveur (13) d'historique de traitement en temps réel selon l'une des revendications précédentes, **caractérisé en ce que** le serveur (12) d'historique DCS est habilité pour traiter des signaux comme une sous-base de données et utiliser dans son système d'archive un dossier propre pour chaque sous-base de données de signaux.

6. Serveur (13) d'historique de traitement en temps réel selon la revendication 5, **caractérisé en ce que** le serveur (12) d'historique DCS contient une RAM, dans laquelle sont habilités des mémoires caches d'écriture/lecture à court terme pour chaque signal, dont la dimension peut être modifiée dynamiquement.

7. Serveur (13) d'historique de traitement en temps réel selon la revendication 6, **caractérisé en ce qu'**un moteur SQL également habilité a accès à une mémoire cache habilitée dans le serveur (12) d'historique DCS.

8. Serveur (13) d'historique de traitement en temps réel selon l'un des revendications 6 ou 7, **caractérisé en ce que** le serveur (12) d'historique DCS est habilité pour contrôler, au moyen d'un traitement flush un vidage des mémoires caches à court terme, ainsi que pour contrôler l'adaptation dynamique de la dimension des mémoires caches d'écriture/lecture à court terme en fonction de la vitesse de signal respective.

9. Serveur (13) d'historique de traitement en temps réel selon l'une des revendications précédentes, **caractérisé en ce que** le serveur (12) d'historique DCS est habilité pour stocker ensemble pour chaque valeur de mesure stockée d'un signal, une estampille temporelle, dans une base de données du serveur (12) d'historique DCS.

10. Serveur (13) d'historique de traitement en temps réel selon l'une des revendications précédentes, **caractérisé en ce que** le serveur (12) d'historique DCS est habilité pour stocker un signal en fonction de la dynamique du signal.

11. Serveur (13) d'historique de traitement en temps réel selon la revendication 10, **caractérisé en ce que** comme critère pour le stockage d'une nouvelle valeur de mesure d'un signal on utilise le fait de dépasser ou non une valeur différentielle de la valeur de mesure actuelle du signal en question et la valeur de mesure stockée au préalable.
